# EUROPEAN PATENT SPECIFICATION

(11) **EP 4 299 923 B1**
(45) Date of publication and mention of the grant of the patent: **10.09.2025**
(21) Application number: 23170780.3
(22) Date of filing: 28.04.2023
(51) Int. Cl.: F16B 2/04, F16B 37/12, F16B 43/00, F16B 5/02

(54) **MANIFOLD WITH REPAIRABLE THREAD INSERT ASSEMBLIES WITHIN MANIFOLD BOREHOLES**
VERTEILER MIT REPARIERBAREN GEWINDEEINSATZANORDNUNGEN IN VERTEILERBOHRUNGEN
COLLECTEUR AVEC ENSEMBLES D'INSERTS DE FILETAGE RÉPARABLES DANS DES TROUS DE FORAGE DE COLLECTEUR

(30) Priority: 29.06.2022 US 202263356790 P; 16.09.2022 US 202217946333
(43) Date of publication of application: 03.01.2024
(73) Proprietor: Hamilton Sundstrand Corporation, Charlotte, NC 28217-4578 (US)
(72) Inventor: ROHRIG, Jake, Simsbury, CT, 06070 (US); ROBBINS, Laurence, Plainville, CT, 06062 (US)
(74) Representative: Dehns

(56) References cited:
- CH-A- 353 879
- DE-U1- 9 414 703

## Description

### CROSS-REFERENCE TO RELATED APPLICATIONS

This application claims the benefit of U.S. Application No. 63/356,790 filed June 29, 2022, and U.S. Application No. 17/946,333 filed September 16, 2022.

### STATEMENT OF FEDERAL SUPPORT

This invention was made with government support under NNH15CN27C awarded by NASA. The government has certain rights in the invention.

### BACKGROUND

Exemplary embodiments of the present disclosure pertain to the art of fluid distribution and, in particular, to fluid distribution manifolds with repairable thread insert assemblies within manifold boreholes.

A manifold is a fluid distribution system that brings many valves and sensors into one place. Manifolds can, therefor, help improve the overall maintainability of a system in which they are used. As space missions become increasingly distant from the help and safety of Earth, systems need to be maintained by astronauts while in flight. Manifolds are a desirable feature of maintainable systems because of their ability to aggregate many components into one place, improving the accessibility for maintenance. However, removal and replacement of components subject the threads of the manifold to wear and fatigue which can result in the inability to re-seat components onto the manifold. Wear, stripping or cross-threading the manifold may result in a maintenance-induced failure where the mating component may no longer seat/seal properly against the manifold. While manifolds might be repaired by drilling and tapping a new hole, this sort of rework is difficult, if not impossible, for astronauts to perform safely while on mission. Further, drilling and tapping repairs can only occur a limited number of times before material becomes weak or runs out entirely. A system with a thread insert assembly is known from CH 353 879 A.

### BRIEF DESCRIPTION

Disclosed is a system as defined by claim 1.

In embodiments, the system is as defined in claim 2. In embodiments, while the shaft is locked within the borehole, the shaft is further configured for being unlocked and thereafter removed from the borehole when the assembly fastener is rotated such that the ring becomes uncompressed.

In embodiments, the head of the assembly fastener is radially larger than the borehole.

In embodiments, the inner boundary shape of the borehole is noncircular.

**In** embodiments, the inner boundary shape of the borehole is polygonal.

**In** embodiments, the ring is formed of one or more polymers.

**In** embodiments, the shaft is formed of metal.

**In** embodiments, the shaft is formed of one or more polymers.

**In** embodiments, the assembly fastener is a screw.

**In** embodiments, the system further includes: an outer washer and an inner washer, each being radially smaller than the borehole, and wherein the outer washer is positioned between the ring and the head of the assembly fastener, and the inner washer is positioned between the ring and the first end surface of the shaft.

**In** embodiments, the implement is fastened to the first surface via an implement fastener threaded into the threaded through hole via the body through hole.

In embodiments, the implement is a sensor.

In embodiments, the implement fastener is a screw.

Further disclosed is a space vehicle having a system with one or more of the above described aspects.

[deleted].

[deleted].

### BRIEF DESCRIPTION OF THE DRAWINGS

The present disclosure is illustrated by way of example and not limited in the accompanying figures in which like reference numerals indicate similar elements.
FIG. 1A shows a manifold that includes repairable thread insert assemblies that interface with boreholes in the manifold;
FIG. 1B shows a detail of a borehole of FIG. 1A;
FIG. 1C shows a detailed views of a manifold and the repairable thread insert assembly as installed and in an exploded view;
FIG. 1D shows another detail of a borehole of FIG. 1A;
FIG. 2A shows an exploded view of the insert assembly;
FIG. 2B shows an assemble view of the insert assembly;
FIG. 3 shows the insert assemblies in a manifold connecting to one or more sensors, where the manifold is in a spacecraft;
FIG. 4 shows removing an implement and insert assembly from the manifold; and
FIG. 5 shows replacing the insert assembly in the manifold and connecting the implement to the manifold via the insert assembly.

### DETAILED DESCRIPTION

A detailed description of one or more embodiments of the disclosed apparatus and method are presented herein by way of exemplification and not limitation with reference to the Figures.

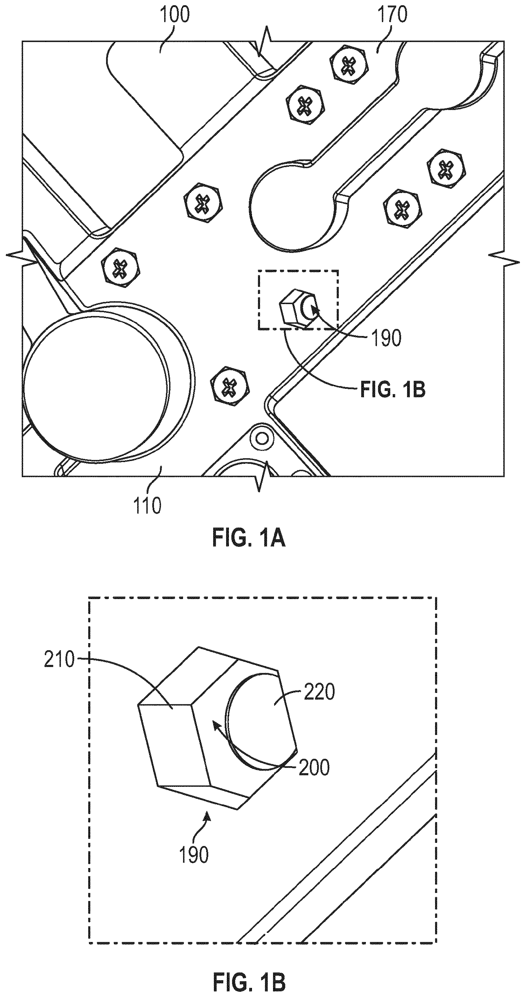

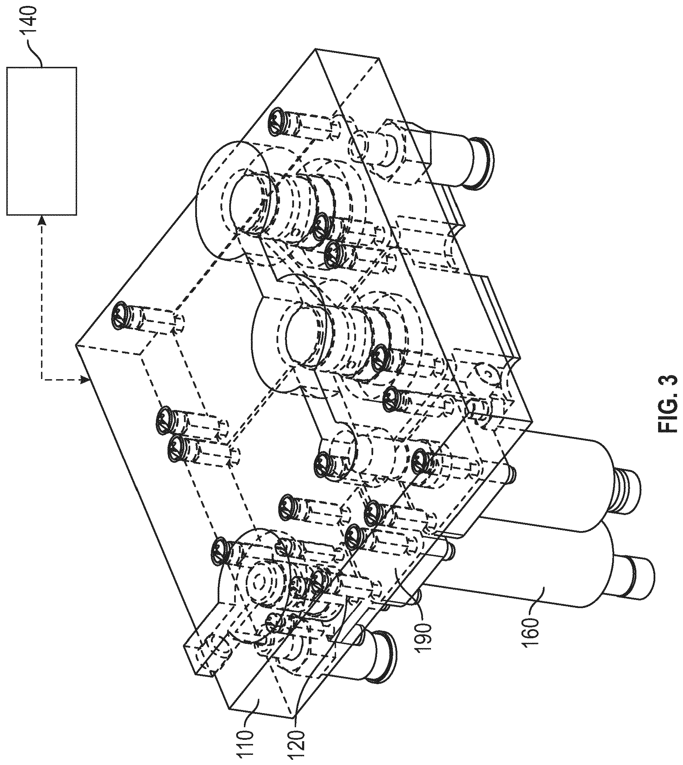

Turning to FIGS. 1A-1D, disclosed is system 100 with a manifold 110 (though other structures are within the scope of the embodiments) and a repairable thread insert assembly (or assembly) 120 that can be used in the manifold 110, e.g., on board a space vehicle 140 (FIG. 3). The manifold 110 includes a first surface 150 configured to seat an implement 160 that is secured with an implement fastener 165 that passes through a hole in an implement flange 167. A second surface 170 is depth-wise spaced apart from the first surface 150. The body 180 includes boreholes 190 formed therein. In one embodiment, each or some of the boreholes 190 can have a same or similar configuration. As such, herein, continued reference will be to the borehole 190. The boreholes 190 may be machined holes in one embodiment.

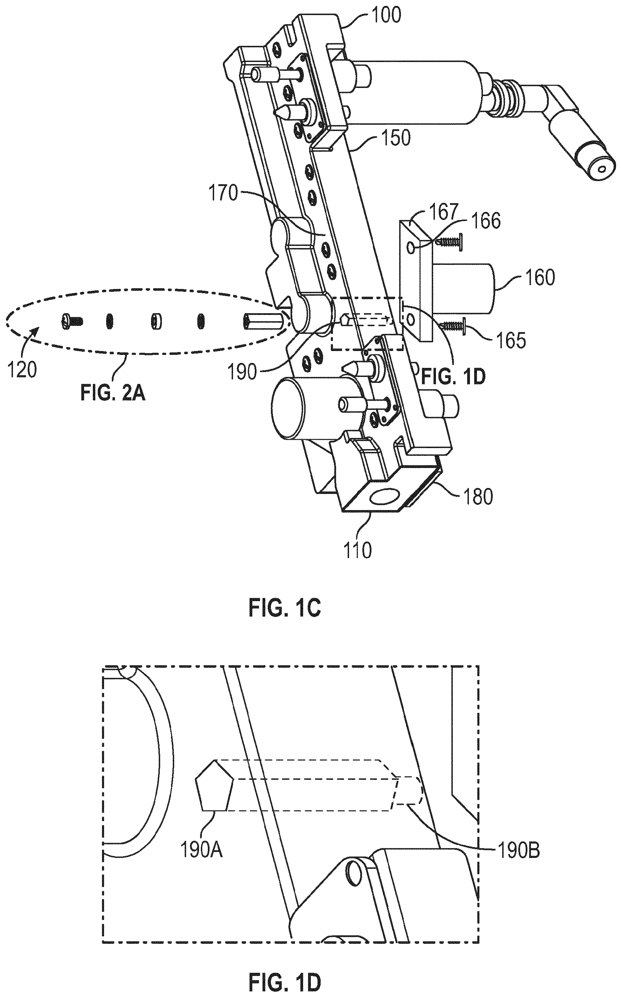

As shown in FIG. 1D, the borehole 190 includes a wide portion 190A that extends depth-wise partially from the second surface 170 towards the first surface 150 to define a shaft seat 200 within the body 180. The borehole 190 has an inner bore surface 210 that defines an inner boundary shape. The inner boundary shape of the borehole 190 is noncircular and is, for example, polygonal and more specifically hexagonal. The borehole 190 includes a narrow portion 190B formed by a body through hole 220 that is coaxially located with and is radially smaller than the borehole 190. The body through hole 220 extends from the inner bore surface 210 to the first surface 150. The body through hole 220 is sized to allow the implement fastener 165 slide through it with little or no friction therebetween.

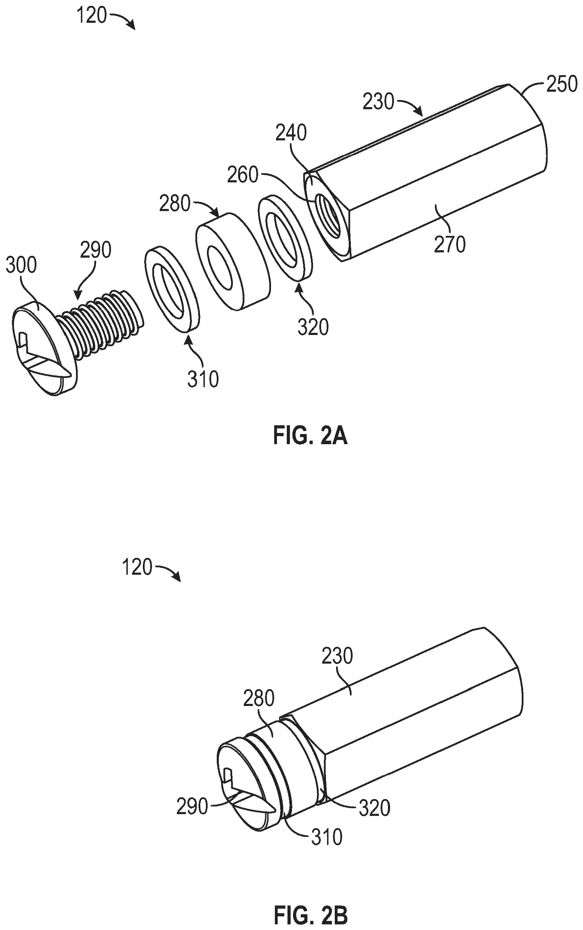

Turning to FIGS. 2A and 2B, detailed views of repairable thread insert assemblies 120 are shown. The assemblies 120 may each have a same configuration so continued reference will be to the assembly 120. Each assembly 120 can be disposed in a borehole 190 of the system 100 from FIG. 1. In one embodiment, there is one assembly 120 for each borehole 190 (FIG. 1B). The assembly 120 includes a shaft 230, or repairable thread insert, that is inserted in the borehole 190. The shaft 230 defines first and second end surfaces 240, 250 that are axially spaced apart from each other. The shaft 230 is axially shorter than the wide portion 190A of the borehole 190. The second end surface 250 is located at the shaft seat 200 (FIG. 1B). A threaded through hole 260 is defined by the shaft 230. The hole 260 extends between the end surfaces 240, 250 of the shaft 230. The threaded through hole 260 is sized to engage the implement fastener 165 (FIG 1C).

An axial outer surface 270 of the shaft 230 defines an outer boundary shape that is complementary to the inner boundary shape of the borehole 190. This prevents the rotation of the shaft when applying torque while inserting a fastener. An elastic ring, or washer, 280 is sized to fit around the threaded through hole 260 and has an outer surface 270 that, unless compressed, is radially smaller than the borehole 190. An assembly threaded fastener (or assembly fastener) 290, which may be a screw, has a head 300. The head 300 of the assembly fastener is radially larger than the threaded through hole 260 and radially smaller than the borehole 190. An outer washer 310 and an inner washer 320 may be included, each sized to fit between the outer surface 270 and threaded through hole 260. The outer washer 310 may be positioned between the ring 280 and the head 300 of the assembly fastener 290. The inner washer 320 may be positioned between the ring 280 and the first end surface 240 of the shaft 230.

When the fastener 290 is "screwed" into the threads of the shaft, the head 300 compresses the elastic ring 280 between the head 300 of the assembly fastener 290 and the first end surface 240 of the shaft 230. From this compression, the outer surface 270 of the ring 280 is pressed against the inner bore surface 210 of the borehole 190 and the shaft 230 is locked within the borehole 190. While the shaft 230 is locked within the borehole 190, the shaft 230 may be unlocked and thereafter removed from the borehole 190 when the assembly fastener 290 is rotated such that the ring 280 becomes uncompressed. When uncompressed, the ring 280 is radially smaller than the borehole 190. The ring 280 may be made from one or more polymers (synthetic rubber or silicone or other material) that can expand when compressed. The shaft 230 may be made from metal that provides for repeated usage and torquing of the mating hardware. Alternatively, the ring and the shaft may be both formed of one or more polymers

The implement 160 may be fastened to the first surface 150 via an implement fastener 165, which may be a screw, threaded into the threaded through hole 260 via the body through hole 220. The implement 160 may be a sensor.

Thus, the system 100 includes an assembly 120 with an assembly fastener 290, an elastic ring 280, two additional washers 300, 310, and a shaft 230. The shaft 230 is the component that is removed/replaced when threads are damaged. The shaft 230 is retained in its installed position in the manifold 110 by the assembly fastener 290 applying compression loading to the elastic ring 280. The elastic ring 280 expands in the manifold 110, allowing the assembly 120 to be retained in the body 180 and function as a fastener until intentionally removed. That is, the assembly fastener 290, when squeezing the elastic ring 280 between the two additional washers 300, 310, causes the elastic ring 280 to expand outwards. The elastic ring 280 presses up against the inside of the borehole 190 (FIG. 1B), providing friction, and making the assembly 120 into a form of a captive fastener.

As shown in FIG. 3, in one embodiment, assemblies 120 of the kind identified above, installed in boreholes 190 in a manifold 110, engage implements 160, e.g., a sensor, a valve, etc., and the manifold 110 is within the space vehicle 140. These assemblies 120 prevent the implements 160 from falling out of the manifold 110.

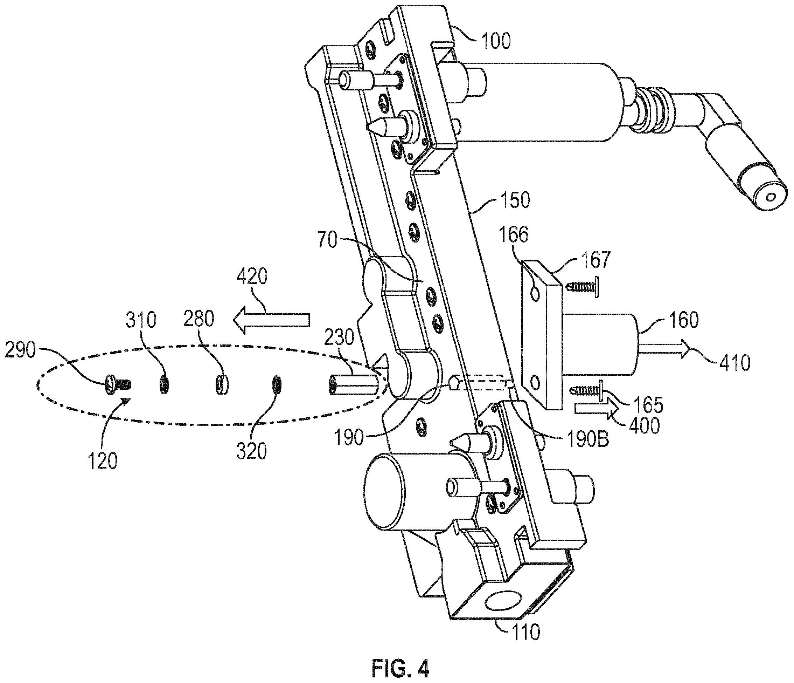

Turning to FIG. 4, in a circumstance where an implement 160 such as a sensor should be replaced, the implement fastener 165 is removed (arrow 400) from the shaft 230. the narrow portion 190B of the borehole 190, and out of the hole 166 in the implement flange 167. Then the implement 160 is moved away first surface 150 of the manifold 110 (arrow 410). If the insert assembly 120 needs to be replaced for any reason, the assembly fastener 290 is removed, i.e., unscrewed from the shaft 230. The ring 280 no longer engages the borehole 190 so that the assembly 120, including the ring 280, washers 310, 320 and shaft 230 are removed from the wide portion 190A of the borehole 190 (arrow 420).

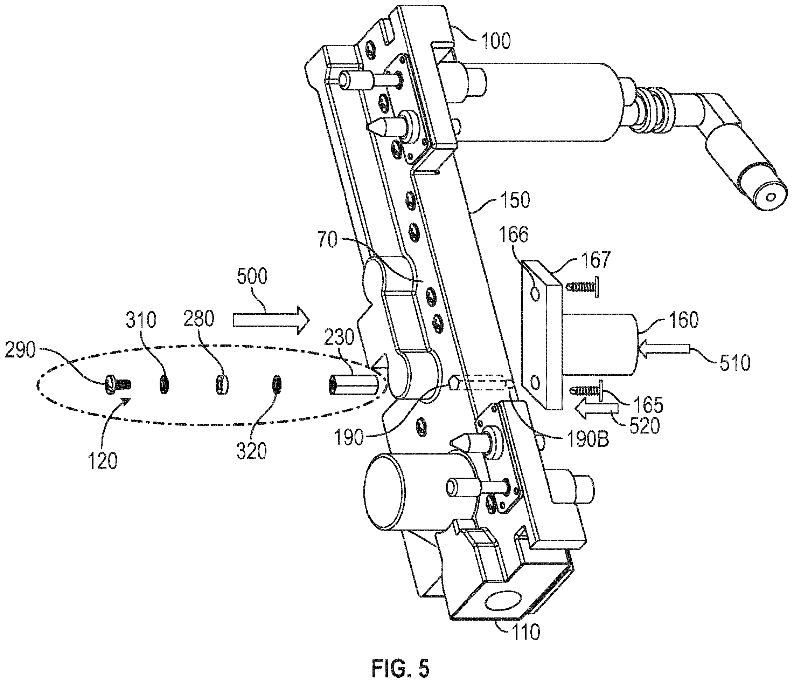

The opposite procedure is followed to mount the replacement implement 160 using the borehole 190 that requires a replacement assembly 120. Turning to FIG. 5 the assembly 120, including the ring 280, washers 310, 320 and shaft 230 are positioned in the wide portion 190A of the borehole 190 (arrow 500). That is, the shaft 230 is inserted first, followed by the inner washer 320, the elastic ring 280 and the outer washer 310. The assembly screw 290 is then "screwed" into the shaft 230 so that the elastic ring 280 expands to engage the borehole 190, fixing the assembly 120 in place. The implement 160 is placed against the first surface 150 of the manifold 110 (arrow 510). The implement fastener 165 is passed through the hole 166 in the implement flange 167, and into the narrow portion 190B of the borehole 190 to engage the shaft 230 (arrow 520). Once the implement fastener 165 is "screwed" into the shaft 230, the implement 160 is fixed to the manifold 110.

It shall be understood based on the disclosure herein that one or more embodiments may provide one or more of the following benefits. However, these benefits are not meant as requirements and are not limiting on the claims unless specifically recited or otherwise mentioned. The embodiments may have a technical effect of, when the manifold failure mode of cross-threading or stripping threads, enabling a replacement the interfacing threads. Embodiments may allow for unlimited thread replacements, limited only by the number of spare parts, and increases system maintainability overall. With the disclosed system, manifold failure mode of cross-threading or stripping threads is eliminated, and drilling and tapping operations are not required to make a repair. Embodiments herein allow the threads of a manifold to be replaced, e.g., utilizing simple hand tools. The disclosed assembly may improve the speed, ease, and safety of a repair. The embodiments prevent metal chips and foreign object debris (FOD) from being generated, which could float into eyes/mouths/noses of crew. Embodiments herein can allow for unlimited thread replacements, up to the quantity of available spare assemblies packed for a mission.

The term "about" is intended to include the degree of error associated with measurement of the particular quantity based upon the equipment available at the time of filing the application. The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the present invention as defined by the claims. In addition, many modifications may be made to adapt a particular situation or material to the teachings of the present disclosure without departing from the scope of the claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. A system including
a manifold (110) having a borehole (190); and
a repairable thread insert assembly, including:
a shaft (230) inserted in the borehole, the shaft defining: first and second end surfaces (240, 250) spaced apart from each other, wherein the shaft is shorter than the borehole;
a threaded through hole extending between the end surfaces; and
an outer surface extending between the end surfaces and defining an outer boundary shape that is complementary to the shape of the borehole;
an elastic ring (280); and
an assembly fastener (290) that is configured to compresses the elastic ring between a head (300) of the assembly fastener and the first end surface of the shaft such that the outer surface of the ring is pressed against the borehole, whereby the shaft is locked within the borehole.

2. The system of claim 1, wherein:
the manifold (110) comprises:
a first surface (150) configured to seat an implement (160);
a second surface (170) spaced apart from the first surface; and
a body (180) extending depth-wise from the first surface to the second surface, wherein the body defines:
the borehole (190) that extends depth-wise, partially through the body, from the second surface towards the first surface to define a shaft seat (200) within the body, wherein the borehole has an inner bore surface (210) defining an inner boundary shape; and
a body through hole (220) that is coaxially located with the borehole and is radially smaller than the borehole, the body through hole extending to the first surface; and
wherein the first and second end surfaces (240, 250) are axially spaced apart from each other, wherein the shaft is axially shorter than the borehole, and wherein the second end is located at the shaft seat;
and wherein the elastic ring (280) has an outer surface that, unless compressed, is radially smaller than the borehole;
the assembly fastener (290) having a head (300) that compresses the elastic ring between the head of the assembly fastener and the first end surface of the shaft such that the outer surface of the ring is pressed against the inner bore surface of the borehole and the shaft is locked within the borehole.

3. The system of claim 2, wherein:
while the shaft (230) is locked within the borehole (190), the shaft is further configured for being unlocked and thereafter removed from the borehole when the assembly fastener is rotated such that the ring becomes uncompressed.

4. The system of claim 3, wherein the head (300) of the assembly fastener (290) is radially larger than the borehole.

5. The system of any preceding claim, wherein the inner boundary shape of the borehole is noncircular.

6. The system of claim 5, wherein the inner boundary shape of the borehole is polygonal.

7. The system of any preceding claim, wherein the elastic ring (280) is formed of one or more polymers.

8. The system of any preceding claim, wherein the shaft (230) is formed of metal.

9. The system of claim 7, wherein the shaft (230) is formed of one or more polymers.

10. The system of any preceding claim, wherein the assembly fastener (290) is a screw.

11. The system of claim 2 or any claim dependent thereon, further comprising:
an outer washer (310) and an inner washer (320), each being radially smaller than the borehole, and
wherein the outer washer is positioned between the ring and the head of the assembly fastener, and the inner washer is positioned between the ring and the first end surface of the shaft.

12. The system of claim 11, further comprising:
the implement (160) fastened to the first surface via an implement fastener (165) threaded into the threaded through hole via the body through hole.

13. The system of claim 12, wherein the implement is a sensor and/or wherein the implement fastener is a screw.

14. A space vehicle comprising the system of claim 12.

## Patentansprüche

1. System, beinhaltend
einen Verteiler (110), der eine Bohrung (190) aufweist; und
eine reparierbare Gewindeeinsatzanordnung, beinhaltend:
einen in die Bohrung eingesetzten Schaft (230), wobei der Schaft Folgendes definiert: eine erste und zweite Endfläche (240, 250),
die voneinander beabstandet sind, wobei der Schaft kürzer ist als die Bohrung;
ein Durchgangsloch mit Gewinde, das sich zwischen den Endflächen erstreckt; und
eine Außenfläche, die sich zwischen den Endflächen erstreckt und eine äußere Begrenzungsform definiert, die komplementär zu der Form der Bohrung ist;
einen elastischen Ring (280); und
ein Anordnungsbefestigungselement (290), das zum Komprimieren des elastischen Rings zwischen einem Kopf (300) des Anordnungsbefestigungselements und der ersten Endfläche des Schafts derart konfiguriert ist, dass die Außenfläche des Rings gegen die Bohrung gedrückt wird, wodurch der Schaft in der Bohrung verriegelt wird.

2. System nach Anspruch 1, wobei:
der Verteiler (110) Folgendes umfasst:
eine erste Fläche (150), die zum Auflegen einer Utensilie (160) konfiguriert ist;
eine zweite Fläche (170), die von der ersten Fläche beabstandet ist; und
einen Körper (180), der sich in der Tiefe von der ersten Fläche zu der zweiten Fläche erstreckt, wobei der Körper Folgendes definiert:
die Bohrung (190), die sich in der Tiefe von der zweiten Fläche in Richtung der ersten Fläche teilweise durch den Körper erstreckt, um einen Schaftsitz (200) innerhalb des Körpers zu definieren, wobei die Bohrung eine innere Bohrfläche (210) aufweist, die eine innere Begrenzungsform definiert; und
ein Körperdurchgangsloch (220), das sich koaxial zu der Bohrung befindet und radial kleiner als die Bohrung ist, wobei sich das Körperdurchgangsloch zu der ersten Fläche erstreckt; und
wobei die erste und die zweite Endfläche (240, 250) axial voneinander beabstandet sind, wobei der Schaft axial kürzer ist als die Bohrung und wobei sich das zweite Ende an dem Schaftsitz befindet;
und wobei der elastische Ring (280) eine Außenfläche aufweist, die, sofern nicht komprimiert, radial kleiner ist als die Bohrung;
wobei das Anordnungsbefestigungselement (290) einen Kopf (300) aufweist, der den elastischen Ring zwischen dem Kopf des Anordnungsbefestigungselements und der ersten Endfläche des Schafts derart komprimiert, dass die Außenfläche des Rings gegen die innere Bohrfläche der Bohrung gedrückt wird und der Schaft in der Bohrung verriegelt wird.

3. System nach Anspruch 2, wobei:
der Schaft ferner, während der Schaft (230) in der Bohrung (190) verriegelt ist, zum Entriegeln und anschließenden Entfernen aus der Bohrung konfiguriert ist, wenn das Anordnungsbefestigungselement derart gedreht wird, dass sich der Ring entspannt.

4. System nach Anspruch 3, wobei der Kopf (300) des Anordnungsbefestigungselements (290) radial größer ist als die Bohrung.

5. System nach einem der vorhergehenden Ansprüche, wobei die innere Begrenzungsform der Bohrung nicht kreisförmig ist.

6. System nach Anspruch 5, wobei die innere Begrenzungsform der Bohrung polygonal ist.

7. System nach einem der vorhergehenden Ansprüche, wobei der elastische Ring (280) aus einem oder mehreren Polymeren ausgebildet ist.

8. System nach einem der vorhergehenden Ansprüche, wobei der Schaft (230) aus Metall ausgebildet ist.

9. System nach Anspruch 7, wobei der Schaft (230) aus einem oder mehreren Polymeren ausgebildet ist.

10. System nach einem der vorhergehenden Ansprüche, wobei das Anordnungsbefestigungselement (290) eine Schraube ist.

11. System nach Anspruch 2 oder einem davon abhängigen Anspruch, ferner umfassend:
eine äußere Scheibe (310) und eine innere Scheibe (320), die jeweils radial kleiner sind als die Bohrung, und
wobei die äußere Scheibe zwischen dem Ring und dem Kopf des Anordnungsbefestigungselements positioniert ist und die innere Scheibe zwischen dem Ring und der ersten Endfläche des Schafts positioniert ist.

12. System nach Anspruch 11, ferner umfassend:
das Utensil (160), das über ein Utensilienbefestigungselement (165), das über die Körperdurchgangsbohrung in die Gewindedurchgangsbohrung eingeschraubt ist, an der ersten Fläche befestigt.

13. System nach Anspruch 12, wobei die Utensilie ein Sensor ist und/oder wobei das Utensilienbefestigungselement eine Schraube ist.

14. Raumfahrzeug, umfassend das System nach Anspruch 12.

## Revendications

1. Système comprenant :
un collecteur (110) comportant un trou de forage (190) ; et
un ensemble d'inserts filetés réparables, incluant :
un arbre (230) inséré dans le trou de forage, l'arbre définissant : une première et une seconde surface d'extrémité (240, 250) espacées l'une de l'autre, dans lequel l'arbre est plus court que le trou de forage ;
un trou traversant fileté se prolongeant entre les surfaces d'extrémité ; et
une surface extérieure se prolongeant entre les surfaces d'extrémité et définissant une forme de limite extérieure qui est complémentaire à la forme du trou de forage ;
un anneau élastique (280) ; et
un élément de fixation d'assemblage (290) qui est configuré pour comprimer l'anneau élastique entre une tête (300) de l'élément de fixation d'assemblage et la première surface d'extrémité de l'arbre, de telle sorte que la surface extérieure de l'anneau soit pressée contre le trou de forage, de sorte que l'arbre soit verrouillé à l'intérieur du trou de forage.

2. Système selon la revendication 1, dans lequel :
le collecteur (110) comprend :
une première surface (150) configurée pour accueillir un outil (160) ;
une seconde surface (170) espacée de la première surface ; et
un corps (180) se prolongeant en profondeur de la première surface à la seconde surface, dans lequel le corps définit :
le trou de forage (190) qui se prolonge en profondeur, partiellement à travers le corps, de la seconde surface vers la première surface pour définir un siège d'arbre (200) à l'intérieur du corps, dans lequel le trou de forage a une surface d'alésage intérieure (210) définissant une forme de limite intérieure ; et
un trou traversant du corps (220) qui est situé coaxialement par rapport au trou de forage et qui est radialement plus petit que le trou de forage, le trou traversant du corps se prolongeant jusqu'à la première surface ; et
dans lequel les première et seconde surfaces d'extrémité (240, 250) sont espacées axialement l'une de l'autre, dans lequel l'arbre est axialement plus court que le trou de forage, et dans lequel la seconde extrémité est située au niveau du siège de l'arbre ;
et dans lequel l'anneau élastique (280) a une surface extérieure qui, à moins d'être comprimée, est radialement plus petite que le trou de forage ;
l'élément de fixation d'assemblage (290) ayant une tête (300) qui comprime l'anneau élastique entre la tête de l'élément de fixation d'assemblage et la première surface d'extrémité de l'arbre, de telle sorte que la surface extérieure de l'anneau soit pressée contre la surface d'alésage intérieure du trou de forage et l'arbre est verrouillé à l'intérieur du trou de forage.

3. Système selon la revendication 2, dans lequel :
tandis que l'arbre (230) est verrouillé dans le trou de forage (190), l'arbre est également configuré pour être déverrouillé, puis retiré du trou de forage lorsque l'élément de fixation d'assemblage est tourné de telle sorte que l'anneau soit décompressé.

4. Système selon la revendication 3, dans lequel la tête (300) de l'élément de fixation d'assemblage (290) est radialement plus grande que le trou de forage.

5. Système selon une quelconque revendication précédente, dans lequel la forme de la limite intérieure du trou de forage n'est pas circulaire.

6. Système selon la revendication 5, dans lequel la forme de la limite intérieure du trou de forage est polygonale.

7. Système selon une quelconque revendication précédente, dans lequel l'anneau élastique (280) est formé d'un ou de plusieurs polymères.

8. Système selon une quelconque revendication précédente, dans lequel l'arbre (230) est formé de métal.

9. Système selon la revendication 7, dans lequel l'arbre (230) est formé d'un ou de plusieurs polymères.

10. Système selon une quelconque revendication précédente, dans lequel l'élément de fixation d'assemblage (290) est une vis.

11. Système selon la revendication 2 ou une quelconque revendication qui en dépend, comprenant également :
une rondelle extérieure (310) et une rondelle intérieure (320), chacune étant radialement plus petite que le trou de forage, et
dans lequel la rondelle extérieure est positionnée entre l'anneau et la tête de l'élément de fixation d'assemblage, et
la rondelle intérieure est positionnée entre l'anneau et la première surface d'extrémité de l'arbre.

12. Système selon la revendication 11, comprenant également : l'outil (160) fixé à la première surface par un élément de fixation de l'outil (165) vissé dans le trou traversant fileté par le trou traversant du corps.

13. Système selon la revendication 12, dans lequel l'outil est un capteur et/ou dans lequel l'élément de fixation de l'outil est une vis.

14. Véhicule spatial comprenant le système selon la revendication 12.
